(19) **Europäisches Patentamt**
**European Patent Office**
**Office européen des brevets**

(11) **EP 3 054 571 A1**

(12) **EUROPÄISCHE PATENTANMELDUNG**

(43) Veröffentlichungstag:
**10.08.2016 Patentblatt 2016/32**

(51) Int Cl.:
*H02M 1/00* (2006.01)     *H02M 1/42* (2007.01)
*H02M 3/158* (2006.01)     *H05B 33/00* (2006.01)

(21) Anmeldenummer: **16151487.2**

(22) Anmeldetag: **15.01.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **09.02.2015 DE 102015202245**

(71) Anmelder: **Tridonic GmbH & Co KG**
**6851 Dornbirn (AT)**

(72) Erfinder: **Netzer, Harald**
**6710 Nenzing (AT)**

(74) Vertreter: **Rupp, Christian**
**Mitscherlich PartmbB**
**Patent- und Rechtsanwälte**
**Sonnenstraße 33**
**80331 München (DE)**

(54) **ABWÄRTSWANDLER MIT FREQUENZMODULIERTER SCHALTERSTEUERUNG**

(57) Die Erfindung stellt ein Betriebsgerät zum Betreiben eines Leuchtmittels bereit, insbesondere einer LED, aufweisend einen Abwärtswandler, dessen Ausgang direkt oder indirekt Anschlüsse für das Leuchtmittel speist, eine Steuereinheit, die dazu ausgelegt ist, einen Schalter des Abwärtswandlers zu takten, wobei die Steuereinheit dazu ausgelegt ist, die Ausgangsspannung des Abwärtswandlers durch die Taktung des Schalters zu regeln, und eine Modulationseinheit innerhalb des Betriebsgeräts, die dazu eingerichtet ist, einer die Frequenz der Taktung des Abwärtswandlers beeinflussende Größe eine Modulation aufzuprägen, die als gezielte Störung der Regelung der Ausgangsspannung des Abwärtswandlers eine Modulation der Frequenz der Taktung des Abwärtswandlers verursacht.

Fig. 2

EP 3 054 571 A1

**Beschreibung**

Die Erfindung bezieht sich auf ein Betriebsgerät mit einem Abwärtswandler (Buck-Wandler), der Anschlüsse aufweist, von denen ausgehend ein von dem Betriebsgerät betriebenes Leuchtmittel gespeist wird.

Insbesondere weist der Abwärtswandler einen Schalter (Transistor, FET, MOSFET, ...) auf, der von einer Steuereinheit angesteuert wird. Diese Ansteuerung kann insbesondere eine getaktete Ansteuerung sein, bei der der Schalter getaktet aktiviert bzw. deaktiviert, d.h. leitend geschaltet bzw. nicht-leitend geschaltet wird. Die Steuereinheit kann dabei insbesondere einen Spulenstrom des Abwärtswandlers überwachen und den Schalter so ansteuern, dass der Strom durch die Spule bzw. eine Induktivität nicht auf null fällt sondern auf einem im Wesentlichen konstanten Wert, insbesondere im zeitlichen Mittel konstant gehalten wird.

Dies wird im Folgenden als nicht-lückender oder kontinuierlicher Betrieb (continuous conduction mode, CCM) bezeichnet. Zum Messen des Spulenstroms kann beispielsweise ein Shunt-Widerstand vorgesehen sein, der mit einer Buck-Diode/Freilaufdiode in Serie geschaltet ist. Wird ein bestimmter Stromwert überschritten bzw. erreicht, kann der Schalter geöffnet werden. Aufgrund der Magnetisierung der Induktivität wird dann der Strom beispielsweise über eine Freilaufdiode getrieben und Leuchtmittel können so an Ausgängen des Abwärtswandlers versorgt werden.

Wenn der Strom durch die Spule aufgrund der Demagnetisierung abfällt und einen bestimmten Wert erreicht (dies kann beispielsweise durch einen zum Schalter parallel geschalteten Spannungsteiler erfasst werden, oder durch eine Hilfswicklung an der Induktivität des Abwärtswandlers), wird der Schalter wieder leitend geschaltet, d.h. aktiviert, um eine erneute Magnetisierung der Spule herbei zuführen. Insbesondere fällt der Spulenstrom niemals auf null ab.

Ein Abwärtswandler nach dem Stand der Technik arbeitet für gewöhnlich mit einer festen Frequenz, d.h. der Schalter des Wandlers wird mit einer festen Frequenz getaktet. Dabei Kann insbesondere ein PWM-Signal zur Taktung des Schalters von der Steuereinheit verwendet werden.

Dies führt jedoch dazu, dass sich ein nachteiliges EMV-Verhalten des Betriebsgeräts ergibt, in dem sich EMV-Störungen, also elektromagnetische Störausstrahlung, im Wesentlichen auf die Betriebsfrequenz des Abwärtswandlers sowie entsprechende Oberwellen konzentrieren.

Ziel der Erfindung ist es daher, ein Betriebsgerät und insbesondere ein Verfahren zur Ansteuerung des Wandlerschalters bereitzustellen, mit dem entsprechende elektromagnetische Störungen verringert werden können oder ein Betrieb möglich ist, in dem elektromagnetische Störungen im Wesentlichen nicht auftreten.

Die Erfindung stellt daher ein Betriebsgerät und ein Verfahren gemäß der unabhängigen Ansprüche bereit. Weiterbildungen der Erfindung sind Gegenstand der abhängigen Ansprüche.

In einem ersten Aspekt stellt die Erfindung ein Betriebsgerät zum Betreiben eines Leuchtmittels bereit, insbesondere einer LED, aufweisend einen Abwärtswandler, dessen Ausgang direkt oder indirekt Anschlüsse für das Leuchtmittel speist, eine Steuereinheit, die dazu ausgelegt ist, einen Schalter des Abwärtswandlers derart zu takten, dass sich ein nicht-lückender Betrieb des Abwärtswandlers ergibt, wobei die Steuereinheit dazu ausgelegt ist, die Ausgangsspannung des Abwärtswandlers durch die Taktung des Schalters zu regeln, und eine Modulationseinheit innerhalb des Betriebsgeräts, die dazu eingerichtet ist, einer die Frequenz der Taktung des Abwärtswandlers beeinflussende Größe eine Modulation aufzuprägen, die (vergleichbar einer gezielte Störung der Regelung der Ausgangsspannung des Abwärtswandlers) eine Modulation der Frequenz der Taktung des Abwärtswandlers verursacht.

Der Abwärtswandler kann eingangsseitig von einer vorzugsweise gleichgerichteten Versorgungsspannung versorgbar sein. Von seiner Ausgangsseite kann das Leuchtmittel, insbesondere ohne weitere aktive Wandlung, mit einem Ausgangsstrom/der Ausgangsspannung versorgbar sein.

Die Steuereinheit kann den Ausgangsstrom und/oder die Ausgangsspannung erfassen.

Die Steuereinheit kann die Taktung des Schalters verändern unter Beibehaltung eines Mittelwerts des Ausgangsstroms und/oder der Ausgangsspannung.

Der Abwärtswandler kann eine Hilfswicklung aufweisen und die Steuereinheit oder die Modulationseinheit kann einen Strom durch eine Induktivität des Abwärtswandlers mittels der Hilfswicklung insbesondere als Ausgangsstrom erfassen.

Die Steuereinheit kann den Schalter einschalten, bevor der erfasste Ausgangsstrom bzw. ein Strom der Induktivität des Abwärtswandlers auf null abfällt.

Die Steuereinheit kann einen Mittelwert des erfassten Ausgangsstroms, der Ausgangsspannung und/oder des Spulenstroms bestimmen.

Die Steuereinheit kann den Schalter ansteuern und einen/eine im Mittelwert im Wesentlichen konstanten Ausgangsstroms und/oder konstante Ausgangsspannung einstellen, insbesondere durch periodische Modulation der Taktung des Schalters.

Die Modulationseinheit kann eine Frequenz der Taktung des Schalters periodisch modulieren. Die Modulationseinheit kann in der Steuereinheit integriert sein. Die Steuereinheit und die Modulationseinheit können dieselbe Einheit sein.

Ein Ausschaltschwellenwert kann vorgesehen sein, und die Steuereinheit kann den Ausgangsstrom und/oder die Ausgangsspannung mit dem Ausschaltschwellenwert vergleichen. Die Steuereinheit kann den Schalter bei Erreichen des Ausschaltschwellenwerts nicht-leitend schalten, d.h. deaktivieren.

Ein Einschaltschwellenwert kann vorgesehen sein und die Steuereinheit kann den Ausgangsstrom und/oder die Ausgangsspannung mit dem Einschaltschwellenwert vergleichen. Die Steuereinheit kann den Schalter bei Erreichen des Einschaltschwellenwerts leitend schalten, d.h. aktivieren.

Die Modulationseinheit kann den Ausschaltschwellenwert und/oder den Einschaltschwellenwert verändern, insbesondere periodisch modulieren.

Die Modulationseinheit kann eine Ein- und/oder Ausschaltzeitdauer des Schalters modulieren, vorzugsweise periodisch.

Die Modulationseinheit kann durch die Modulation eine sinusförmige, dreieckige oder trapezförmige Einhüllende des Stromverlaufs erzeugen.

Die Frequenz der Taktung des Schalters kann im Bereich von über 10 kHz, vorzugsweise über 50 kHz liegen. Eine Frequenz der Modulation der Taktung kann im Bereich von wenigstens 1 kHz, vorzugsweise über 10 kHz liegen.

Die Steuereinheit kann die Modulation abhängig von dem betriebenen Leuchtmittel einstellen.

Der Abwärtswandler kann ausgehend von einer Leistungsfaktorkorrekturschaltung versorgt sein.

In einem weiteren Aspekt stellt die Erfindung ein Verfahren zum Betreiben eines Abwärtswandlers bereit, insbesondere zum Betreiben wenigstens einer LED, wobei der Abwärtswandler an seinem Ausgang direkt oder indirekt Anschlüsse für das Leuchtmittel speist, eine Steuereinheit einen Schalter des Abwärtswandlers derart taktet, dass sich ein nichtlückender Betrieb des Abwärtswandlers ergibt, wobei die Steuereinheit die Ausgangsspannung des Abwärtswandlers durch die Taktung des Schalters regelt, und eine Modulationseinheit innerhalb des Betriebsgeräts, die einer die Frequenz der Taktung des Abwärtswandlers beeinflussende Grösse eine Modulation aufprägt, die als gezielte Störung der Regelung der Ausgangsspannung des Abwärtswandlers eine Modulation der Frequenz der Taktung des Abwärtswandlers verursacht.

Die Erfindung wird nunmehr auch mit Blick auf die Figuren beschrieben. Dabei zeigt

Fig. 1    schematisch einen bekannten Abwärtswandler;

Fig. 2    schematisch einen Abwärtswandler mit einer Steuereinheit gemäß der Erfindung;

Fig. 3    schematisch eine alternative Ausgestaltung eines Abwärtswandlers;

Fig. 4    schematisch eine exemplarische erfindungsgemäße Modulation des Ausgangsstroms;

Fig. 5    schematisch eine weitere exemplarische erfindungsgemäße Modulation des Ausgangsstroms.

Fig. 6    detaillierte eine exemplarische erfindungsgemäße Modulation.

Besonders ist es Ziel der Erfindung, das Störspektrum zu verbreitern. Dabei wird gezielt ein sogenannter "Sweep Mode" für die Ansteuerung des Wandlerschalters verwendet, d.h. die Betriebsfrequenz des Abwärtswandlers wird gezielt und vorzugsweise periodisch steigend und abfallend moduliert. Die Modulation erfolgt dabei so, dass sich im Mittel, d.h. über einen längeren Zeitraum hinweg und im zeitlichen Mittel, die Frequenz der normalerweise (d.h. bei konstanter Last und konstanter Versorgung des Wandlers) vorliegenden festen Frequenz ergibt. Insbesondere wird der Mittelwert des Ausgangsstroms durch die gezielte Modulation nicht verändert. Dies führt positiverweise auch dazu, dass die Modulation im von dem Leuchtmittel emittierten Licht nicht erkennbar ist.

Es wird also einer die Frequenz der Taktung des Abwärtswandlers beeinflussende Größe eine Modulation aufgeprägt, die vergleichbar einer gezielten Störung der Regelung der Ausgangsspannung des Abwärtswandlers eine Modulation der Frequenz der Taktung des Schalters des Abwärtswandlers verursacht, d.h. die Regelung antwortet auf die "Störung" durch eine Modulation der Frequenz der Taktung des Schalters, da die Taktung die Stellgrösse der Regelung darstellt.

Es ist zudem möglich, dass eine Ausschaltschwelle für den Schalter des Wandlers vorgesehen ist. Diese kann ebenfalls moduliert werden, sodass sich eine insbesondere periodische Modulation bzw. Veränderung der Ausschaltschwelle ergibt. Die Ausschaltschwelle gibt dann an, zu welchem Zeitpunkt der Schalter des Abwärtswandlers abgeschaltet wird, d.h. deaktiviert, bzw. nicht-leitend geschaltet wird. Ebenso kann der Wiedereinschaltzeitpunkt des Schalters über eine Wiedereinschaltschwelle, bzw. einen entsprechenden Strom-/Spannungswert festgelegt sein, der ebenfalls moduliert werden kann, wie dies bereits für die Abschaltschwelle bzw. den Abschaltschwellenwert beschrieben ist.

Alternativ oder zusätzlich kann auch vorgesehen sein, dass nach dem Abschalten des Schalters das Wiedereinschalten nach einer Ausschaltzeitdauer erfolgt, die von der Steuereinheit des Betriebsgeräts berechnet ist. Auch diese berechnete Ausschaltzeitdauer kann moduliert werden, d.h. die Zeit, nach der ein Wiedereinschalten des Schalters erfolgt, kann ebenfalls insbesondere periodisch in der Zeit veränderlich sein. Eine entsprechende Modulation ist möglich, wenn statt der Ausschaltzeitdauer eine Einschaltzeitdauer, also eine Zeitdauer zwischen einem Einschalten des Schalters und dem nachfolgenden Ausschalten des Schalters von der Steuereinheit berechnet wird.

Die Modulation der Abschalt-/Einschaltschwellenwerte bzw. der Schaltzeitdauern kann dabei so erfolgen, dass sich für den von dem Wandler erzeugten im Wesentlichen dreiecksförmigen Stromverlauf eine im Wesentlichen sinusförmige, dreieckige oder trapezförmige Einhüllende ergibt. Selbstverständlich sind auch andere Formen möglich wie z.B. sägezahn- oder im Wesentlichen parabelförmige Einhüllende. Somit ergibt sich dann auch eine zeitlich annähernde Periodizität des dreiecksförmigen Stromverlaufs. Dazu kann in der Steuereinheit ein Modul vorgesehen sein, dass periodisch die genannten Abschalt-/Einschaltschwellenwerte bzw. die Einschalt-/Ausschaltzeitdauern moduliert.

Eine periodische Veränderung der Schaltfrequenz des Abwärtswandlerschalters kann erkannt werden, wenn der Wandler ausgehend von einer Konstantspannung versorgt ist. Damit ist die Periodizität der Frequenz nicht Folge eines Regelverhaltens der Steuereinheit, sondern wird gezielt in Vorwärtsrichtung ("Feed forward") aufgeprägt.

Typische Schaltfrequenzen des Abwärtswandlers liegen dabei im Bereich von über 10 kHz, vorzugsweise über 50 kHz, während die Modulationsfrequenz der Betriebsfrequenz des Abwärtswandlerschalters auch im Bereich von wenigstens 1 kHz, vorzugsweise über 10 kHz liegen kann. Somit liegt die Modulationsfrequenz wesentlich höher als sich etwaig aus dem Regelverhalten des Netzspannungsrippels ergebende Änderungen. Die daraus resultierenden und im Vergleich zur hochfrequenten Modulationsfrequenz verhältnismäßig niedrigen Frequenzen (beispielsweise 100 Hz) können natürlich der genannten hochfrequenten gezielten Modulation überlagert sein. Bei Betrieb eines Abwärtswandlers sind Arbeitsfrequenzen und harmonische Oberwellen kritisch im Frequenzbereich von ca. 9 kHz bis 30 MHz (Comite International Special des Perturbations Radioelectriques Standard CISPR 15, Limits and methods of measurement of radio disturbance characteristics of Electrical lighting and similar equipment; auch Norm EN55015).

Die hochfrequente Modulation gemäß der Erfindung kann auch lastabhängig, stufenweise oder kontinuierlich erfolgen. Erfolgt die Versorgung des Abwärtswandlers über eine Leistungsfaktorkorrektureinheit (PFC-Einheit), ist dies insbesondere bei einer geringen Last vorteilhaft, bei der die Ausgangsspannung der PFC-Einheit im Wesentlichen konstant ist. Bei hoher Last kann typischerweise die Ausgangsspannung der PFC-Einheit mit einem Rippel behaftet sein, was über das Regelverhalten des Abwärtswandlers automatisch und ohne die gezielte Modulation der Taktung des Schalters zu einer Verbreiterung des EMV-Spektrums führen kann.

Insgesamt wird also der Spitzenstromwert periodisch erhöht und verringer und die Ausschaltzeitdauer kann periodisch berechnet werden, um einen konstanten Durchschnittsausgangsstrom zu erzeugen. Der Ausgangsstromrippel wird periodisch während der normalen Betriebsweise verändert.

In einem Normalbetrieb, d.h. ohne die erfindungsgemäße Modulation, ist daher die Arbeitsfrequenz im nicht lückenden Betrieb mehr oder weniger konstant. Eine Beeinflussung erfolgt dann lediglich durch die Eingangsspannung beispielsweise einen 100 Hz Rippel auf einer Busspannung vor einem gewünschten Rippel auf der Ausgangsspannung als Funktion der LED Spannung. Eine Frequenzmodulation mit einer konstanten Amplitude und einem konstanten Durchschnittsausgangsstrom ist nicht möglich, da die Anstiegs- bzw. Abfallzeiten des Stroms durch die Spule bzw. den Induktivitätswert vorgegeben sind. Eine normale Amplitudenmodulation führt auch zu einem veränderlichen Durchschnittswert des Ausgangsstroms. Bei der erfindungsgemäßen Modulation ist es, wie gesagt, jedoch vorteilhaft, wenn ein fester Durchschnittswert des Ausgangsstroms gehalten wird.

Erfindungsgemäß ist der Rippel des Ausgangsstroms durch die Modulation deshalb so moduliert, dass zwar eine Frequenzmodulation erreicht wird, jedoch der Durchschnittswert des Ausgangsstroms konstant bleibt.

Insbesondere kann gemäß der Erfindung ein Komparator zum Vergleich eines Spannungswerts vorgesehen sein, dessen Referenz periodisch verändert wird. Auch kann eine Ausschaltzeitdauer periodisch als Funktion des vorhergehenden Spitzenstromwerts berechnet werden. Dabei kann dann sowohl der Spitzenstrom als auch die Ausschaltzeitdauer auch dann verändert werden, wenn ein Betrieb an einem festen Arbeitspunkt erfolgt, beispielsweise wenn ein spezielles Dimmniveau (x% der maximalen Helligkeit des von dem Leuchtmittel emittierten Lichts) eingestellt ist und eine bestimmte Spannung für ein bestimmtes Leuchtmittel bereit gestellt wird. Insbesondere kann die Steuereinheit ein Leuchtmittel oder eine angeschlossene Last erkennen und abhängig davon eine elektrische Versorgung bereitstellen.

Die Steuereinheit und die Modulationseinheit können vorzugsweise jeweils als ein Mikrocontroller, eine integrierte Schaltund IC oder eine ASIC-Schaltung ausgestaltet sein und die entsprechenden Berechnungen ausführen.

Gemäß einem Ausführungsbeispiel der Erfindung wird Spitzenstromwert des Ausgangsstroms periodisch angehoben bzw. abgesenkt, um einen konstanten Ausgangsstromwert zu halten. Auch die Ausschaltzeitdauer kann angepasst werden und für jeden Zeitschritt, d.h. vorzugsweise nach einem Erreichen eines Spitzenstromwertes, entsprechend gewählt werden. Um die Ausschaltzeitdauer zu berechnen, kann die Steuereinheit dazu eingerichtet sein, den vorherigen Spitzenstromwert zu speichern. Es ist dabei zu verstehen, dass ein Spitzenstromwert über einen längeren Zeitraum gehalten werden kann, bevor eine Veränderung erfolgt. So kann beispielsweise über eine bestimmte Anzahl von hochfrequenten Perioden der Spitzenstromwert auf einem Wert gehalten werden, während anschließend eine Anzahl von Perioden ein Betrieb mit einem anderen Spitzenwert erfolgt. Somit wird quasi die periodische Modulation über einen längeren Zeitraum hin gestreckt.

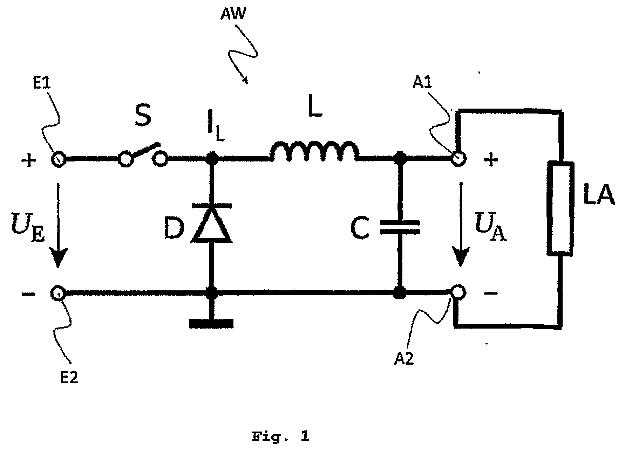

Fig. 1 zeigt exemplarisch einen Abwärtswandler AW, wie er aus dem Stand der Technik bekannt ist. Der Strom in der Schaltung ist zu Beginn bei einem offenem Schalter S null (Schalter ist deaktiviert, in der "Aus"-Position). Wenn der Schalter S das erste Mal geschlossen wird, beginnt der Strom $I_L$ anzusteigen und eine Induktivität/Spule/Wicklung L wird magnetisiert bzw. geladen. An den Anschlüssen der Induktivität L wird eine Gegenspannung in Reaktion auf die Stromänderung erzeugt. Diese Gegenspannung wirkt der von der Spannungsversorgung gelieferten Eingangsspannung $U_E$ als Spannungsabfall entgegen und verringert daher die Nettospannung an einer Last LA.

Im Laufe der Zeit nimmt die Änderungsrate des Stroms $I_L$ ab, ebenso wie die Spannung über der Induktivität L, wobei die Ausgangsspannung $U_A$ des Abwärtswandlers an Ausgangsanschlüssen A1, A2 des Abwärtswandlers AW und der Last LA ansteigt. Während dieser Zeit speichert die Induktivität Energie in Form eines magnetischen Feldes. Wenn der Schalter S wieder geöffnet wird, wird die von der Spannungsversorgung an Eingangsanschlüssen E1, E2 des Abwärtswandlers AW gelieferte Eingangsspannung $U_E$ von der Schaltung getrennt, und der Strom $I_L$ sinkt ab. Die Veränderung des Stroms $I_L$ verursacht eine Änderung der Spannung über der Induktivität, wobei nun die von der Spannungsversorgung gelieferte Eingangsspannung $U_E$ gestützt wird.

Die gespeicherte Energie in dem Magnetfeld der Induktivität L stützt den Stromfluss durch die Last LA. Dabei wird die in der Induktivität L gespeicherte Energie entladen. Wenn der Schalter S wieder geschlossen wird, bevor die Induktivität L vollständig entladen ist, wird die Spannung an der Last immer größer als Null sein (CCM). Eine Diode D ist vorgesehen, um den Stromfluss durch die Induktivität L sicherzustellen, während eine parallele dazu angeordnete Kapazität C als Puffer vorgesehen ist.

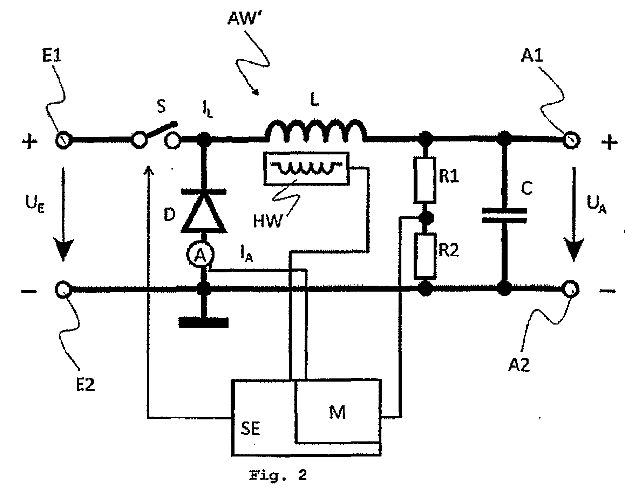

Fig. 2 zeigt einen erfindungsgemäßen Abwärtswandler AW', der im Wesentlichen Komponenten aufweist, die denen des Abwärtswandlers AW aus Fig. 1 entsprechen.

Zudem ist eine Steuereinheit SE dargestellt, die einen Strom durch die Induktivität L, der im Wesentlichen dem Ausgangsstrom des Abwärtswandler AW' entspricht, z.B. mit Hilfe einer Hilfswicklung HW, erfassen kann.

Alternativ oder zusätzlich kann die Steuereinheit SE auch einen Ausgangsstrom $I_A$ des Abwärtswandlers AW' bestimmen, beispielsweise an einem Shunt-Widerstand, der in Fig. 2, als Amperemeter A dargestellt ist. Ebenfalls kann ein Spannungsteiler aus Widerständen R1, R2 vorgesehen sein, um die Ausgangsspannung $U_A$ des Abwärtswandlers AW' zu bestimmen. Die Steuereinheit SE taktet dann vorzugsweise abhängig von erfassten Größen den Schalter S (angedeutet durch den von der Steuereinheit SE ausgehenden Pfeil). Die Steuereinheit SE kann den Schalter S derart takten, dass sich ein nichtlückender Betrieb des Abwärtswandlers AW', also ein CCM-Betrieb, ergibt, wobei die Steuereinheit SE Ausgangsspannung $U_A$ des Abwärtswandlers AW' durch die Taktung des Schalters S regelt. Das Amperemeter aus Fig. 2 kann alternativ auch an einem der Ausgangsanschlüsse A1, A2 angeordnet sein, um den gesamten Ausgangsstrom zu messen. Bei Platzierung des Amperemeters an der Diode D kann der Strom insbesondere nur bei geöffneten Schalter S gemessen werden.

Ebenfalls gezeigt ist eine Modulationseinheit M, die Teil der Steuereinheit SE sein kann, aber auch separat dazu vorgesehen sein kann. Sie kann einer die Frequenz der Taktung des Abwärtswandlers AW' beeinflussende Größe eine Modulation aufprägen, die als gezielte Störung der Regelung der Ausgangsspannung $U_A$ des Abwärtswandlers AW' eine Modulation der Frequenz der Taktung des Abwärtswandlers durch die Modulationseinheit bzw. des Schalters S verursacht. Die Modulationseinheit weist dabei insbesondere den oben genannten Komparator auf.

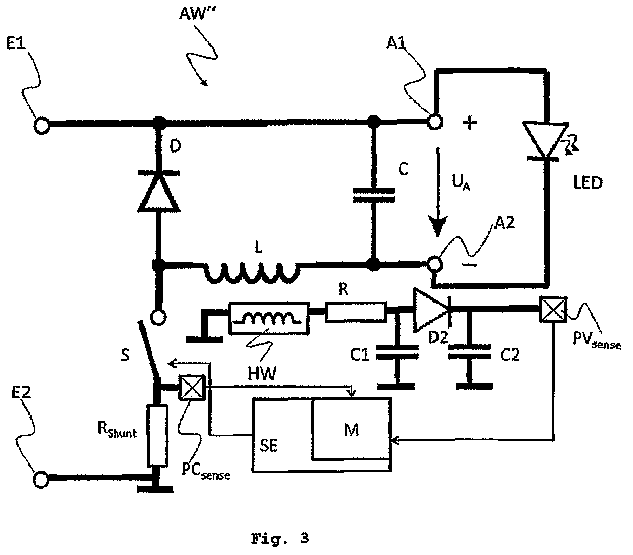

Eine alternative Ausgestaltung für den Abwärtswandler AW' ist in Fig. 3 als Abwärtswandler AW" gezeigt. Hier wird der Widerstand $R_{shunt}$ verwendet, um auf Basis einer Messung an einem Messpunkt $PC_{sense}$ und auf einen Vergleich mit dem Ausschaltschwellenwert hin, einen Ausschaltzeitpunkt für den Schalter S zu bestimmen. Die Induktivität L, die mit der Hilfswicklung HW gekoppelt ist, wird verwendet, um während der Ausschaltzeit des Schalters S die Ausgangsspannung $U_A$ (die während der Ausschaltzeitdauer in etwa auch über der Induktivität L anliegt) an einem weiteren Messpunkt $PV_{sense}$ zu messen und damit die Ausschaltzeitdauer zu berechnen. Dazu ist die Hilfswicklung HW mit dem Messpunkt $PV_{sense}$ über einen Widerstad R und eine Diode D2 verbunden, die mit der Hilfswicklung HW in Serie geschaltet sind. Die Anode und die Kathode der Diode D2 sind zudem jeweils über einen Pufferkondensator C1, C2 mit dem Massepotential verbunden. Die Ausgangsspannung $U_A$ versorgt exemplarisch das Leuchtmittel LED als Last.

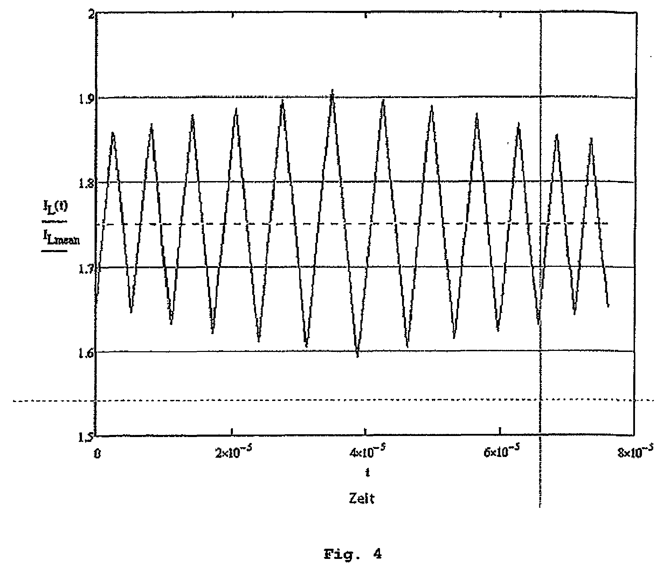

Fig. 4 zeigt einen Verlauf eines entsprechend modulierten Stroms $I_L$, der einem Ausgangsstrom $I_{out}$ des Abwärtswandlers AW', AW" entspricht über eine Zeit t, wobei der dreieckförmige Kurvenverlauf den Stromverlauf darstellt und die gestrichelte Linie den Durchschnittsstrom $I_{Lmean}$. Klar zu sehen ist hier, dass der Durchschnittsstrom $I_{Lmean}$ trotz der aufgeprägten Modulation gleichbleibt. Es erfolgt also im Wesentlichen keine Beeinflussung durch die Veränderung der Frequenz bzw. einer Einschaltzeitdauer $t_{on}$ des Schalters S und/oder einer Ausschaltzeitdauer $t_{off}$ des Schalters S.

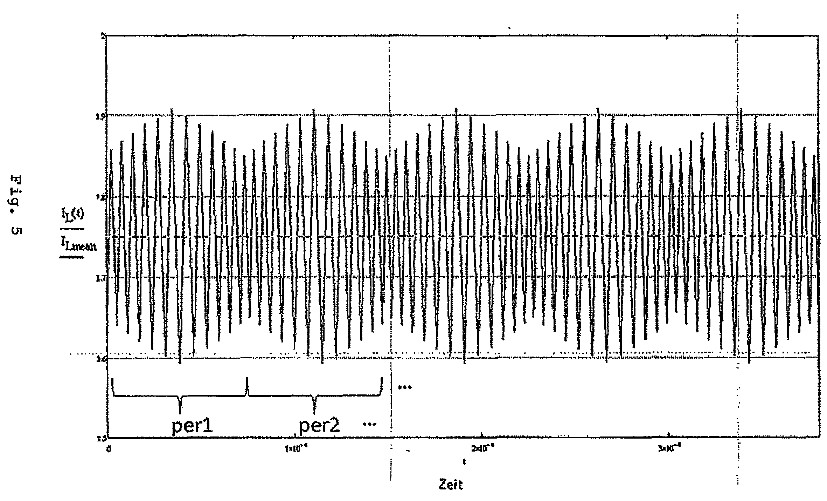

Fig. 5 zeigt weiter eine periodische Modulation der Frequenz über einen längeren Zeitraum, wobei insgesamt 5 periodische Modulationen des Ausgangsstroms $I_L$ erfolgen. Die Modulation einer Periode per1, per2, ... entspricht dabei im Wesentlichen der aus Fig. 4. Auch hier ist der konstant gehaltene Mittelwert $I_{Lmean}$ gestrichelt eingezeichnet. In dem dargestellten Beispiel werden jeweils aufeinanderfolgende positive und negative Spitzenstromwerte verändert, so dass sich ein Spitzenstromwert von dem vorhergehenden unterscheidet.

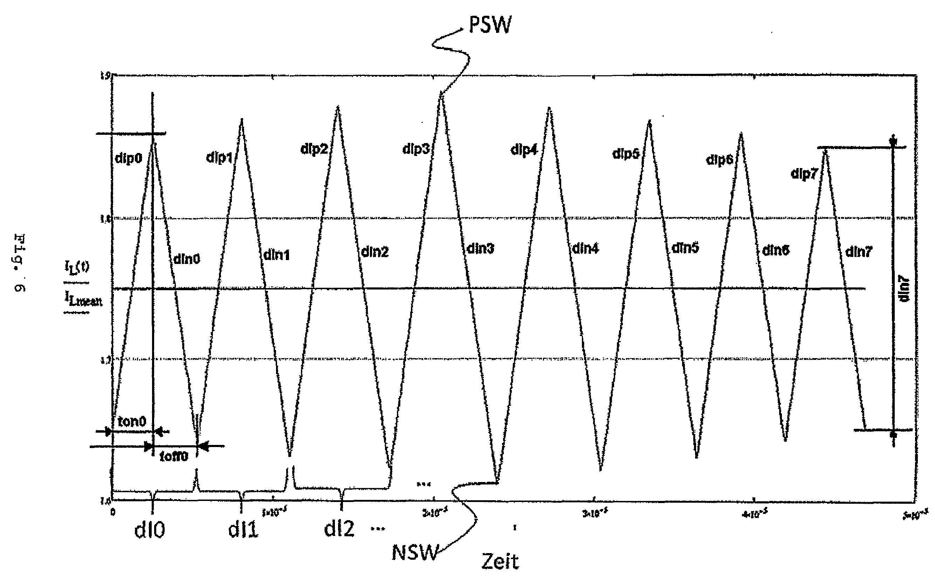

Fig. 6 zeigt detaillierter, wie eine Modulation erfolgen kann. Insbesondere kann der positive und/oder der negative Spitzenstromwert periodisch erhöht und/oder verringert werden und, um eine im Mittel konstanten Strom zu erreichen, die Ausschaltzeitdauer $t_{off}$ des Schalters S kann für jede Zeitdauer bzw. Periode neu berechnet werden. Um die Ausschaltzeitdauer $t_{off}$ zu berechnen wird der Wert des vorhergehenden Spitzenstroms verwendet. Fig. 6 zeigt dabei 7 (X = 0, 1, ..., 6) Modulationsschritte, wobei dIpX den Stromunterschied (das Delta des Strom-Rippels) während der Einschaltzeitdauer des Schalters S angibt (also die positive Flanke p für Schritt X des dreiecksförmigen Stromverlaufs). dInX gibt Stromunterschied (das Delta des Strom-Rippels) während der Ausschaltzeitdauer des Schalters S an (also die negative Flanke n für Schritt X des dreiecksförmigen Stromverlaufs). Ebenfalls eingezeichnet sind die Zeitdauern $t_{off}0$ und $t_{on}0$ für den Schritt 0.

Zu erkennen ist auch, dass der positive Spitzenstromwert zunächst ansteigt (bis dIp3), wobei die Differenz zwischen einem positiven Spitzenstromwert PSW und einem negativen Spitzenstromwert NSW bei dIn3 am größten ist. Anschließend werden die positiven und negativen Spitzenstromwerte wieder reduziert bis dIp7/dIn7.

Die Werte dIpX und dInX können dabei wie folgt berechnet werden:

$$dIp_x := \left| \begin{array}{l} \left[I_{p\_init} + (nsteps - x)\cdot step - \left[I_{n\_init} - step\cdot[nsteps - (x - 1)]\right]\right] \ \text{if } x \geq \dfrac{nsteps}{2} \\[2em] \left[I_{p\_init} + (x + 1)\cdot step - \left(I_{n\_init} - x\cdot step\right)\right] \ \text{if } x < \dfrac{nsteps}{2} \end{array} \right.$$

$$dIn_x := \left| \begin{array}{l} \left[I_{p\_init} + (x + 1)\cdot step - \left[I_{n\_init} - (x + 1)\cdot step\right]\right] \ \text{if } x < \dfrac{nsteps}{2} \\[2em] \left[I_{p\_init} + (nsteps - x)\cdot step - \left[I_{n\_init} - step\cdot(nsteps - x)\right]\right] \ \text{if } x \geq \dfrac{nsteps}{2} \end{array} \right.$$

Hierbei ist $I_{p\_init} = I_{out} + I_{ripple\_min}$ der minimale positive Spitzenstromwert, $I_{n\_init} = I_{out} - I_{ripple\_min}$ der minimale negative Spitzenstromwert und $I_{ripple\_min}$ der minimale Ausgangsstromrippel (z.B. 100mA). $I_{out}$ ist der Ausgangsstrom an den Ausgangsanschlüssen A1, A2 des Abwärtswandlers AW', AW" (z.B. 1,75 A). "step" legt die Modulationsschrittweite ("sweep mode step size") fest, z.B. 10mA, "nsteps" die Anzahl der Schritte "steps" (z.B. 7 oder 11) und X den jeweiligen Schritt (X= 0, 1, 2, ... bis nsteps).

$t_{on}X$ kann dann berechnet werden als

$$t_{on_x} := \frac{L\cdot dIp_x}{V_{in} - V_{out}}$$

und $t_{off}X$ als

$$t_{off_x} := \frac{L\cdot dIn_x}{V_{out}},$$

wobei L ein Induktivitätswert der Abwärtswandler-Induktivität L ist, z.B. 500µH. $V_{in} = U_E$ ist die Eingangsspannung des Abwärtswandlers AW', AW" (z.B. 82V) an den Eingangsanschlüssen E1, E2 und $V_{out} = U_A$ die Ausgangsspannung des Abwärtswandlers AW', AW" ist (z.B. 41V) an den Ausgangsanschlüssen A1, A2.

Die Zeitdauer einer (HF-)Periode $T_X$ kann dann berechnet werden ebenso wie die (HF-)Frequenz $f_X$:

$$T_X := t_{on_x} + t_{off_x}$$

$$f_x := \frac{1}{T_x}$$

Auch einer Modulationszeitdauer $T_{sweep}$ und eine Modulationsfrequenz $f_{sweep}$ lässt sich bestimmen:

$$T_{sweep} := \sum_x T_x$$

$$f_{sweep} := \frac{1}{T_{sweep}}$$

Der Ausgangsstrom für eine Modulationsphase (Anzahl der Schritte nsteps + 1 (HF-) Perioden) bestehend aus Anstiegszeitdauern und Abfallzeitdauern ($t_{on}$, $t_{off}$) kann dann z.B. berechnet werden mit

$$I_L(t) =$$

$$
\begin{cases}
\left(I_{out} - \frac{dIn_{nsteps}}{2}\right) + \frac{(V_{in} - V_{out}) \cdot t}{L} & \text{if } a = 0 \wedge \left(0 \le t \le t_{on_0}\right) \\[2em]
\left[\left(I_{out} + \frac{dIn_a}{2}\right) - \frac{V_{out} \cdot \left(t - t_{on_a}\right)}{L}\right] & \text{if } a = 0 \wedge \left(t_{on_0} < t \le T_0\right) \\[2em]
\left[\left(I_{out} - \frac{dIn_{a-1}}{2}\right) + \frac{(V_{in} - V_{out}) \cdot \left(t - \sum_{i=0}^{a-1} T_i\right)}{L}\right] & \text{if } a > 0 \wedge \left(\sum_{i=0}^{a-1} T_i < t \le \sum_{i=0}^{a-1} T_i + t_{on_a}\right) \\[2em]
\left[\left(I_{out} + \frac{dIn_a}{2}\right) - \frac{V_{out} \cdot \left(t - t_{on_a} - \sum_{i=0}^{a-1} T_i\right)}{L}\right] & \text{if } a > 0 \wedge \left(\sum_{i=0}^{a-1} T_i + t_{on_a} < t \le \sum_{i=0}^{a} T_i\right)
\end{cases}
$$

Entsprechend kann der Mittelwert berechnet werden zu

$$I_{Lmean} := \frac{1}{(nelements + 1)} \cdot \left(\sum_t I_L(t)\right),$$

wobei "nelements" einen Wert für die zeitliche Auflösung angibt, z.B. 500. Der Duty-Cycle "Duty" lässt sich bestimmen zu:

$$Duty = \frac{V_{out}}{V_{in}}$$

Während in den Figs. 4 und 5 jeweils jeder positive/negative Spitzenstromwert des Ausgangsstroms einen anderen Wert aufweist, kann es auch vorgesehen sein, dass eine Veränderung des Spitzenstromwerts erst nach einer Anzahl von Einschaltvorgängen verändert wird. Beispielsweise kann der positive und/oder der negative Spitzenstromwert für 5 (HF-)Perioden konstant gehalten werden, z.B. 5 Perioden mit dI0, 5 Perioden mit dI1, 5 Perioden mit dI2, etc. Wichtig ist, dass der Wert der Ausgangsstromrippels während dem Normalbetrieb vorzugsweise periodisch verändert wird, unter Beibehaltung des Ausgangsstrommittels.

Die Steuereinheit SE, die Modulationseinheit M und der Abwärtswandler AW', AW" sind vorzugsweise in einem Betriebsgerät angebracht, das zum Betrieb einer Last, bzw. eines Leuchtmittels und insbesondere wenigstens einer LED dient.

Es ist jedoch zu verstehen, dass die Erfindungsgemäße Lösung auch unabhängig von dem Betrieb eines Leuchtmittels, vorzugsweise in jedem Gebäudetechnikgerät zum Einsatz kommen kann, bei dem sich ein negatives EMV-Verhalten beim Betrieb eines Abwärtswandlers mit fester Frequenz ergibt.

Obwohl hier hauptsächlich die Funktionsweise im CCM-Betrieb beschrieben wird, ist zu verstehen, dass die Erfindung prinzipiell auch einem lückenden Betrieb (discontinous conduction mode, DCM) oder Grenzbetrieb zwischen lückenden und nichtlückenden Betrieb (borderline conduction mode, BCM) zum Einsatz kommen kann. Im BCM-Betrieb wird der Schalter S unmittelbar wieder eingeschaltet, sobald die Induktivität L oder Spule vollständig entmagnetisiert ist, der Strom durch die Induktivität also auf null abgefallen ist. Im DCM-Betrieb erfolgt ein Wiedereinschalten des Schalters S erst nach einer Abschaltzeitdauer, nachdem ein Nulldurchgang des Spulenstroms/Strom an der Induktivität L erfasst wurde.

**Patentansprüche**

1. Betriebsgerät zum Betreiben eines Leuchtmittels, insbesondere einer LED, aufweisend:

   - einen Abwärtswandler (AW'), dessen Ausgang (A1, A2) direkt oder indirekt Anschlüsse für das Leuchtmittel speist,
   - eine Steuereinheit (SE), die dazu ausgelegt ist, einen Schalter (S) des Abwärtswandlers (AW') zu takten, wobei die Steuereinheit (SE) dazu ausgelegt ist, die Ausgangsspannung ($U_A$) des Abwärtswandlers (AW') durch die Taktung des Schalters (S) zu regeln, und
   - eine Modulationseinheit (M) innerhalb des Betriebsgeräts, die dazu eingerichtet ist, einer die Frequenz der Taktung des Abwärtswandlers (AW') beeinflussende Größe eine Modulation aufzuprägen, die eine Modulation der Frequenz der Taktung des Abwärtswandlers (AW') verursacht.

2. Betriebsgerät nach Anspruch 1, wobei der Abwärtswandler (AW') eingangsseitig von einer vorzugsweise gleichgerichteten Versorgungsspannung ($U_E$) versorgbar ist, und wobei ausgehend von seiner Ausgangsseite, insbesondere ohne weitere aktive Wandlung, das Leuchtmittel mit einem Ausgangsstrom ($I_{out}$)/der Ausgangsspannung ($U_A$) versorgbar ist.

3. Betriebsgerät nach Anspruch 1 oder 2, wobei die Steuereinheit (SE) dazu eingerichtet ist, den Ausgangsstrom ($I_{out}$) und/oder die Ausgangsspannung ($U_A$) zu erfassen.

4. Betriebsgerät nach Anspruch 1, wobei die Steuereinheit (SE) dazu ausgelegt ist, den Abwärtswandler (AW') derart zu takten, dass sich ein nichtlückender Betrieb des Abwärtswandlers (AW') ergibt.

5. Betriebsgerät nach einem der vorgehenden Ansprüche, wobei die Steuereinheit (SE) dazu eingerichtet ist, die Taktung des Schalters (S) zu verändern unter Beibehaltung eines Mittelwerts des Ausgangsstroms ($I_{out}$) und/oder der Ausgangsspannung ($U_A$).

6. Betriebsgerät nach einem der vorgehenden Ansprüche, wobei der Abwärtswandler (AW') eine Hilfswicklung (HW) aufweist und die Steuereinheit (SE) dazu eingerichtet ist, einen Strom durch eine Induktivität des Abwärtswandlers mittels der Hilfswicklung (HW) insbesondere als Ausgangsstrom ($I_{out}$) zu erfassen.

7.  Betriebsgerät nach einem der vorgehenden Ansprüche, wobei die Steuereinheit (SE) dazu eingerichtet ist, den Schalter (S) einzuschalten, bevor der erfasste Ausgangsstrom ($I_{out}$) bzw. ein Strom ($I_L$) einer Induktivität (L) des Abwärtswandlers (AW') auf null abfällt.

8.  Betriebsgerät nach einem der vorgehenden Ansprüche, wobei die Steuereinheit (SE) dazu eingerichtet ist, einen Mittelwert ($I_{Lmean}$) des erfassten Ausgangsstroms ($I_{out}$), der Ausgangsspannung ($U_A$) und/oder des Stroms durch die Induktivität ($I_L$) zu bestimmen.

9.  Betriebsgerät nach einem der vorgehenden Ansprüche, wobei die Steuereinheit (SE) dazu eingerichtet ist, den Schalter (S) anzusteuern und einen/eine im Mittelwert im Wesentlichen konstanten Ausgangsstroms ($I_{out}$) und/oder konstante Ausgangsspannung ($U_A$) einzustellen, insbesondere durch periodische Modulation der Taktung des Schalters (S).

10. Betriebsgerät nach einem der vorgehenden Ansprüche, wobei die Modulationseinheit (M) dazu eingerichtet ist, eine Frequenz der Taktung des Schalters (S) periodisch zu modulieren.

11. Betriebsgerät nach einem der vorgehenden Ansprüche, wobei ein Ausschaltschwellenwert vorgesehen ist, und die Steuereinheit (SE) dazu eingerichtet ist, den Ausgangsstrom ($I_{out}$) und/oder die Ausgangsspannung ($U_A$) mit dem Ausschaltschwellenwert zu vergleichen, und wobei die Steuereinheit (SE) dazu eingerichtet ist, den Schalter (S) bei Erreichen des Ausschaltschwellenwerts nicht-leitend zu schalten.

12. Betriebsgerät nach einem der vorgehenden Ansprüche, ein Einschaltschwellenwert vorgesehen ist, und die Steuereinheit (SE) dazu eingerichtet ist, den Ausgangsstrom ($I_{out}$) und/oder die Ausgangsspannung ($U_A$) mit dem Einschaltschwellenwert zu vergleichen, und wobei die Steuereinheit (SE) dazu eingerichtet ist, den Schalter (S) bei Erreichen des Einschaltschwellenwerts leitend zu schalten.

13. Betriebsgerät nach Anspruch 11 oder 12, wobei die Modulationseinheit (M) dazu eingerichtet ist, den Ausschaltschwellenwert und/oder den Einschaltschwellenwert zu verändern, insbesondere periodisch zu modulieren.

14. Betriebsgerät nach einem der vorgehenden Ansprüche, wobei die Modulationseinheit (SE) dazu eingerichtet ist, eine Ein- und/oder Ausschaltzeitdauer ($t_{on}$, $t_{off}$) des Schalters (S) zu modulieren, vorzugsweise periodisch.

15. Betriebsgerät nach einem der vorgehenden Ansprüche, wobei die Modulationseinheit (M) dazu eingerichtet ist, durch die Modulation eine sinusförmige, dreieckige oder trapezförmige Einhüllende des Stromverlaufs zu erzeugen.

16. Betriebsgerät nach einem der vorgehenden Ansprüche, wobei die Frequenz der Taktung des Schalters im Bereich von über 10 kHz, vorzugsweise über 50 kHz und eine Frequenz der Modulation der Taktung im Bereich von wenigstens 1 kHz, vorzugsweise über 10 kHz liegt.

17. Betriebsgerät nach einem der vorgehenden Ansprüche, wobei die Modulationseinheit (M) und/oder die Steuereinheit (SE) dazu eingerichtet ist/sind, die Modulation abhängig von dem betriebenen Leuchtmittel einzustellen.

18. Betriebsgerät nach einem der vorgehenden Ansprüche, wobei der Abwärtswandler ausgehend von einer Leistungsfaktorkorrekturschaltung versorgt ist.

19. Verfahren zum Betreiben eines Abwärtswandlers, insbesondere zum Betreiben wenigstens einer LED, wobei der Abwärtswandler (AW') an seinem Ausgang (A1, A2) direkt oder indirekt Anschlüsse für das Leuchtmittel speist, und eine Steuereinheit (SE) einen Schalter (S) des Abwärtswandlers (AW')taktet, wobei die Steuereinheit (SE) die Ausgangsspannung ($U_A$) des Abwärtswandlers (AW') durch die Taktung des Schalters (S) regelt, und eine Modulationseinheit (M) innerhalb des Betriebsgeräts, die einer die Frequenz der Taktung des Abwärtswandlers (AW') beeinflussende Größe eine Modulation aufprägt, die eine Modulation der Frequenz der Taktung des Abwärtswandlers (AW') verursacht.

20. Verfahren nach Anspruch 19, wobei die Steuereinheit (SE) den Schalter (S) des Abwärtswandlers (AW') derart taktet, dass sich ein nichtlückender Betrieb des Abwärtswandlers (AW') ergibt.

Fig. 1

Fig. 2

Fig. 3

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 16 15 1487

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/095865 A2 (NXP BV [NL]; HOOGZAAD GIAN [NL]) 6. August 2009 (2009-08-06) <br> * Seite 1, Zeile 2 - Seite 1, Zeile 5 * <br> * Seite 3, Zeile 25 - Seite 3, Zeile 30 * <br> * Seite 4, Zeile 5 - Seite 4, Zeile 16 * <br> * Seite 5, Zeile 6 - Seite 5, Zeile 18 * <br> * Seite 7, Zeile 25 - Seite 8, Zeile 2 * <br> * Seite 25, Zeile 24 - Seite 25, Zeile 29 * <br> * Seite 45, Zeile 21 - Seite 45, Zeile 26 * <br> * Abbildungen 3, 6 * <br> ----- | 1-20 | INV. <br> H02M1/00 <br> H02M1/42 <br> H02M3/158 <br> H05B33/00 |
| X <br><br> A | EP 2 723 146 A1 (LINEAR TECHN INC [US]) 23. April 2014 (2014-04-23) <br> * Absatz [0026] * <br> * Absatz [0036] * <br> * Anspruch 1; Abbildungen 4-8 * <br> ----- | 1,19 <br><br> 11-14 | |
| A | DE 10 2007 028785 A1 (TRIDONICATCO GMBH & CO KG [AT]) 24. Dezember 2008 (2008-12-24) <br> * Abbildung 3 * <br> * Absatz [0037] - Absatz [0038] * <br> ----- | 6,15,18 | **RECHERCHIERTE SACHGEBIETE (IPC)** <br><br> H02M <br> H05B |

Der vorliegende Recherchenbericht wurde für alle Patentansprüche erstellt

| Recherchenort | Abschlußdatum der Recherche | Prüfer |
|---|---|---|
| Den Haag | 28. Juni 2016 | Madouroglou, E |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 1487

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2016

| Im Recherchenbericht angeführtes Patentdokument | Datum der Veröffentlichung | Mitglied(er) der Patentfamilie | Datum der Veröffentlichung |
|---|---|---|---|
| WO 2009095865 A2 | 06-08-2009 | CN 102037783 A<br>EP 2311298 A2<br>US 2010315016 A1<br>US 2013175929 A1<br>WO 2009095865 A2 | 27-04-2011<br>20-04-2011<br>16-12-2010<br>11-07-2013<br>06-08-2009 |
| EP 2723146 A1 | 23-04-2014 | CN 103781240 A<br>EP 2723146 A1<br>TW 201417628 A<br>US 2014111110 A1 | 07-05-2014<br>23-04-2014<br>01-05-2014<br>24-04-2014 |
| DE 102007028785 A1 | 24-12-2008 | CN 102318173 A<br>DE 102007028785 A1<br>EP 2160823 A1<br>WO 2009000465 A1 | 11-01-2012<br>24-12-2008<br>10-03-2010<br>31-12-2008 |

EPO FORM P0461

Für nähere Einzelheiten zu diesem Anhang : siehe Amtsblatt des Europäischen Patentamts, Nr.12/82